**Europäisches Patentamt**

(19) **European Patent Office**

**Office européen des brevets**

(11) Veröffentlichungsnummer: **0 171 452**
**B1**

(12) # EUROPÄISCHE PATENTSCHRIFT

(45) Veröffentlichungstag der Patentschrift:
**02.11.88**

(51) Int. Cl.⁴: **C 02 F 3/20**

(21) Anmeldenummer: **84109756.1**

(22) Anmeldetag: **16.08.84**

(54) Luftverteiler zum feinblasigen Belüften von Wasser.

(43) Veröffentlichungstag der Anmeldung:
**19.02.86 Patentblatt 86/8**

(45) Bekanntmachung des Hinweises auf die Patenterteilung:
**02.11.88 Patentblatt 88/44**

(84) Benannte Vertragsstaaten:
**AT BE CH DE FR GB IT LI NL**

(56) Entgegenhaltungen:
**EP-A-0 101 145**
**DE-A-2 035 651**
**DE-A-2 942 607**
**US-A-2 023 924**

**K.R. DIETRICH: "Die Abwassertechnik", 2.
Auflage, Seite 101, Dr. Alfred Hüthig Verlag,
Heidelberg, DE
ABWASSERTECHNOLOGIE (BLITZ & CZYSZ)
SPRINGER VERLAG BERLIN (1984), Seiten 684-686**

**Die Akte enthält technische Angaben, die nach
dem Eingang der Anmeldung eingereicht wurden
und die nicht in dieser Patentschrift enthalten sind.**

(73) Patentinhaber: **Messner, Rudolf, Laufer Mühle,
D-8551 Adelsdorf (DE)**

(72) Erfinder: **Messner, Rudolf, Laufer Mühle, D-8551
Adelsdorf (DE)**

(74) Vertreter: **Hafner, Dieter, Dr.rer.nat., Dipl.- Phys.,
Ostendstrasse 132, D-8500 Nürnberg 30 (DE)**

EP 0 171 452 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft einen Luftverteiler zum feinblasigen Belüften von Wasser, insbesondere zur Verwendung in biologischen Abwasser-Reinigungsanlagen, mit einer über einer dichten Unterlage angeordneten, gelochten Luftverteiler-Folie, die mit ihren Rändern eingespannt ist und welche bei fehlender oder geringer Luftzufuhr auf der dichten Unterlage satt aufliegt, an ihren Rändern luftdicht mit dieser Unterlage verbunden ist sowie über der gelochten Luftverteiler-Folie angeordnete Stegleisten.

Ein derartiger Luftverteiler ist aus der DE-PS-2 942 607 bekannt. Bei dem bekannten Luftverteiler erfolgt die Verbindung der gelochten Luftverteiler-Folie mit einer dichten Unterlage mittels eines geschlossenen Rahmens. Die dichte Unterlage besteht aus einer ungelochten Folie, die durch mehrere zwischen den Rahmenseiten sich erstreckende Stege abgestützt ist. Da die Luftverteiler der beschriebenen Art im Betrieb ständig unter Wasser angeordnet sein müssen, muß der geschlossene Rahmen und müssen die sich zwischen den Rahmenseiten erstreckenden Stege aus rostfreiem Material bestehen. Die Herstellung der geschlossenen Rahmen und das Einspannen der ungelochten Folie und der gelochten Folie ist sehr kostenintensiv.

Der dort gezeigte Luftverteiler ermöglicht bereits eine sehr großflächige, verfahrenswirksame Belüftung von Wasser in Klärbecken oder dergleichen, ist jedoch hinsichtlich seiner Montage sehr aufwendig. Derartige Plattenbelüfter nach dem Stand der Technik werden nämlich auf vorher in die Klärbecken einzubauende Rohrsysteme aufgesetzt, die Luftzufuhr erfolgt von unten etwa im Zentrum der Platte. Neben einem relativ hohen Konstruktionsaufwand erfordert insbesondere die Montage im Klärbecken, daß vorher ein Netz von Rohrleitungen verlegt wird, das gleichsam als Träger für die im Becken zu betreibenden Plattenbelüfter dient.

Der Erfindung liegt demgegenüber die Aufgabe zugrunde, einen Luftverteiler der eingangs erläuterten Art derart auszubilden, daß die Herstellung bzw. die Montage, unter Einsparung hochwertiger Materialien, leichter und einfacher wird.

Diese Aufgabe wird nach der vorliegenden Erfindung bei einem Luftverteiler der eingangs erläuterten Art im wesentlichen dadurch gelöst, daß die dichte Unterlage aus einer festen Platte aus Kunststoff besteht, daß die gelochte Luftverteiler-Folie an ihren Rändern mittels Randleisten dicht mit der Platte verbunden ist und daß die Stegleisten ebenfalls aus Kunststoff bestehend, direkt mit der festen Platte verbunden sind.

Die Verbindung zwischen Randleisten, gelochter Luftverteiler-Folie und/oder Stegleisten mit der festen Platte kann in vorteilhafter Weise durch, vorzugsweise selbstschneidende Schrauben, aber auch durch Nieten erfolgen.

Nach einem weiteren Ausführungsbeispiel sind zur Verbindung zwischen Randleisten und der festen Platte in Abständen den Rand umgreifende Klammern vorgesehen.

Um ein Aufschwimmen der Luftverteiler zu verhindern, sind in der festen Platte gemäß einer Weiterbildung der Erfindung, Ballasteinlagen angeordnet, vorzugsweise in Form von quer verlaufenden Stegen, beispielsweise aus Eisen oder Stahl.

In noch weiterer Ausgestaltung der Erfindung ist die gelochte Luftverteiler-Folie mit einem Luftzufuhr-Anschluß in einer Abdichtscheibe versehen.

Die feste Platte kann aus Kunststoffen, vorzugsweise glasfaserverstärktem Kunststoff, Eternit oder dergleichen ausgebildet sein. Die Stegleisten sind ebenfalls aus Kunststoff. Bei der Herstellung dieser Teile aus Kunststoff besteht die Möglichkeit, die Verbindung zwischen diesen Teilen ohne vorgelochte Öffnungen durch selbstschneidende Schrauben oder durch Nieten zu bewirken.

Da erfindungsgemäß die oberhalb der gelochten Luftverteiler-Folie angeordneten Stegleisten direkt mit der festen Platte verschraubt oder vernietet sind, werden in dem Luftverteiler Längskammern gebildet, die eine weitere Verbesserung und Vergleichmäßigung der Belüftung bewirken.

Einzelheiten, Merkmale und Vorteile der Erfindung werden anhand der Zeichnung näher erläutert, die schematische Ausführungsbeispiele darstellt. Dabei zeigt:

Fig. 1     einen Luftverteiler in perspektivischer Ansicht, und

Fig. 2     einen Querschnitt für einen Luftverteiler gemäß Fig. 1 in auseinander gezogener Stellung der Teile.

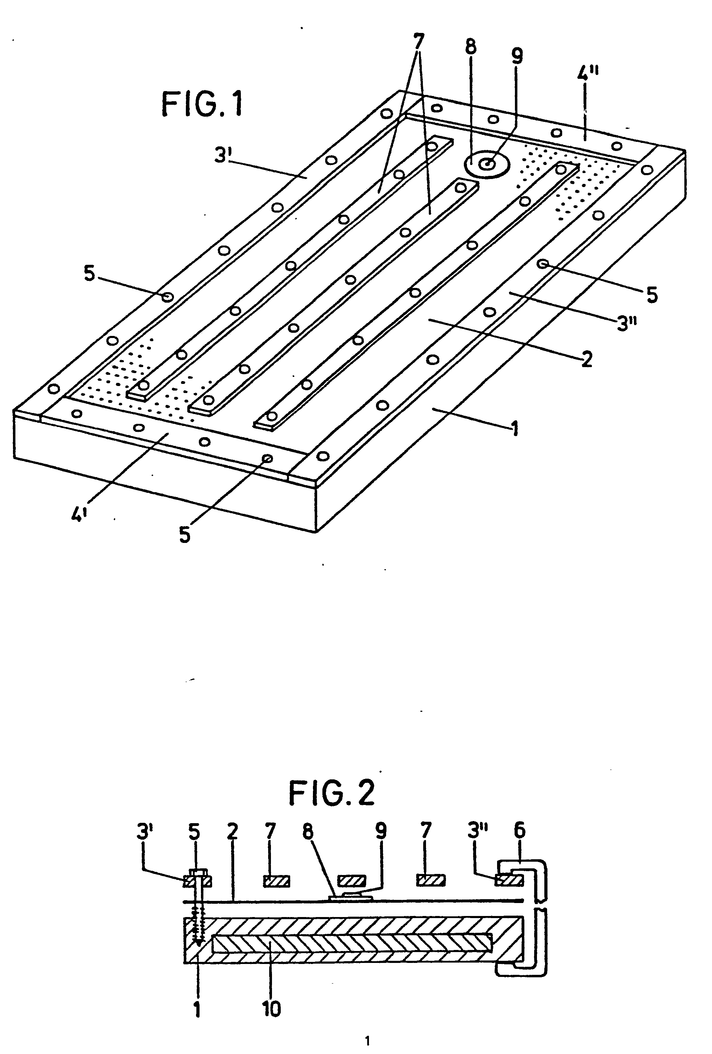

Ein in Fig. 1 dargestellter erfindungsgemäßer Luftverteiler besteht aus einer festen Platte 1 aus Kunststoff, Eternit oder dergl.. Auf dieser festen Platte 1 ist eine gelochte Luftverteiler-Folie 2 angeordnet. Zur dichten Verbindung der gelochten Luftverteiler-Folie 2 mit der festen Platte 1 sind Randleisten 3', 3''; 4', 4'' vorgesehen. Zur Verbindung zwischen den Randleisten 3', 3'', 4', 4'' und der festen Platte 1 dienen wie in Fig. 2 links dargestellt Schrauben 5 die an geeigneten Stellen direkt durch die Randleisten 3, 4 und die Luftverteiler-Folie 2 hindurch in die feste Platte 1 eingeschraubt werden.

Um ein Aufwölben der gelochten Luftverteiler-Folie 2 bei Zufuhr von Luft oder $O_2$ zu verhindern, sind wie an sich bekannt, Stegleisten 7 vorgesehen. Die Stegleisten 7 bestehen ebenfalls aus Kunststoff und sind in Längsrichtung des Luftverteilers angeordnet, derart, daß sie die quer verlaufenden Leisten 4' ,4'' nicht erreichen, so daß durch das Festschrauben der Stegleisten 7 an der festen Platte 1 zwar Längskammern gebildet werden, die jedoch an den Querenden miteinander in Verbindung stehen.

Zur Erhöhung des spezifischen Gewichtes des Luftverteilers sind in der festen Platte 1 Ballast-Einlagen in Form von quer verlaufenden Leisten, beispielsweise aus Eisen oder Stahl, vorgesehen. Diese Ballast-Einlagen 10 können während der Herstellung der festen Platte 1 bereits miteingeformt werden. Zur Zuführung von Luft oder $O_2$ ist die gelochte Luftverteiler-Folie 2 vorzugsweise an einem Längsende mit einem Luftzufuhr-Anschluß 9 versehen, der in einer Abdichtscheibe 8 mündet.

Durch die erfindungsgemäße Ausbildung wird erreicht, daß die aus dem Luftverteiler austretenden Luftblasen über die gesamte Verteilerfläche mit einem gleichmäßigen Durchmesser sowie eine gleichmäßige Verteilung aufweisen.

Die Erfindung ist nicht auf das dargestellte und beschriebene Ausführungsbeispiel beschränkt. Beispielsweise können die Stegleisten auch quer zur Längsrichtung und/oder die Ballasteinlagen in Längsrichtung verlaufend angeordnet sein. Auch können die bei einem Ausführungsbeispiel verwendeten Klammern 6 zur Befestigung der gelochten Luftverteiler-Folie 2 an der festen Platte 1 zusätzlich mit der festen Platte 1 verschraubt oder vernietet sein.

**Bezugszeichenliste**

1   feste Platte
2   gelochte Luftverteiler-Folie
3', 3''   Rand-Profil-Leiste
4', 4''   Rand-Profil-Leiste
5   Befestigungsmittel (Schraube)
6   Klammer
7   Stegleiste
8   Abdichtscheibe
9   Luftzufuhranschluß
10   Ballast-Einlage (Leiste)

**Patentansprüche**

1. Luftverteiler zum feinblasigen Belüften von Wasser, mit einer über einer dichten Unterlage angeordneten, gelochten Luftverteiler-Folie, die mit ihren Rändern eingespannt ist und welche bei fehlender oder geringer Luftzufuhr auf der dichten Unterlage satt aufliegt, an ihren Rändern luftdicht mit dieser Unterlage verbunden ist sowie über der gelochten Luftverteiler-Folie angeordnete Stegleisten, dadurch gekennzeichnet, daß
- die dichte Unterlage aus einer festen Platte (1) aus Kunststoff oder Asbestzement besteht,
- die gelochte Luftverteiler-Folie (2) an ihren Rändern mittels Randleisten (3, 4) dicht mit der festen Platte verbunden ist,
- die Stegleisten (7) ebenfalls aus Kunststoff bestehend, direkt mit der festen Platte verbunden sind.

2. Luftverteiler nach Anspruch 1, dadurch gekennzeichnet, daß zur Verbindung zwischen Randleisten (3, 4), Luftverteiler-Folie (2) und/oder Stegleisten (7) mit der festen Platte (1) vorzugsweise selbstschneidende Schrauben (5) dienen.

3. Luftverteiler nach Anspruch 1, dadurch gekennzeichnet, daß die Verbindung zwischen Randleisten (3, 4), Luftverteiler-Folie (2) und/oder Stegleisten (7) mit der festen Platte (1) mittels Nieten bewirkt ist.

4. Luftverteiler nach Anspruch 1, dadurch gekennzeichnet, daß zur Verbindung der Luftverteiler-Folie (2) mit der festen Platte (1) Randleisten (3, 4) umgreifende Klammern (6) vorgesehen sind.

5. Luftverteiler nach einem der Ansprüche 1 bis 4, dadurch gekennzeichnet, daß in der festen Platte (1) in Abständen quer verlaufende Ballasteinlagen (10) angeordnet sind.

6. Luftverteiler nach Anspruch 5, dadurch gekennzeichnet, daß als Ballasteinlagen (10) Eisenstäbe dienen.

7. Luftverteiler nach einem oder mehreren der Ansprüche 1 bis 6, dadurch gekennzeichnet, daß die Luftverteiler-Folie (2) mit einem Luftzufuhranschluß (9) in einer Abdichtscheibe (8) versehen ist.

**Claims**

1. Air dispenser for the fine jet aeration of water with a perforated air dispensing foil disposed over a sealed support which is stretched by its edges and which, when the air supply is lacking or reduced, applies as a close fit onto the support, is joined at its edges air-tight with said support, as well as by web strips disposed over the perforated air dispensing foil, characterised in that
- the sealed support consists in a solid plate (1) of plastic or asbestos cement;
- the perforated air dispensing foil (2) is connected tightly at its edges with the solid plate by means of edge strips (3, 4);
- the web strips (7), also made of plastic, are directly connected with the solid plate.

2. Air dispenser according to Claim 1, characterised in that for the connection between edge strips (3, 4), air dispenser foil (2) and/or web strips (7) with the solid plate (1) use is made preferably of tapping screws (5).

3. Air dispenser according to Claim 1, characterised in that the connection between edge strips (3, 4), air dispensing foil (2) and /or web strips (7) with the solid plate (1) is effected by means of rivets.

4. Air dispenser according to Claim 1, characterised in that, for the connection of the air dispenser foil (2) with the solid plate (1), clamps (6) gripping edge strips (3, 4) are provided.

5. Air dispenser according to one of Claims 1 to 4, characterised in that ballast inserts extending transversally (10) are disposed at intervals in the solid plate (1).

6. Air dispenser according to Claim 5, characterised in that iron rods are used as ballast inserts (10).

7. Air dispenser according to one or more of Claims 1 to 6, characterised in that the air dispenser foil (2) is provided with an air supply connection (9) in a sealing plate (8).


**Revendications**

1. Diffuseur pour disperser de fines bulles d'air dans de l'eau, comportant une feuille trouée distributrice d'air qui est placée sur une paroi inférieure étanche et qui est maintenue serrée par ses bords, feuille qui repose à plat sur la paroi inférieure étanche en cas d'absence ou de diminution de l'arrivée d'air et qui, le long de ses bord, est reliée de façon étanche à l'air à cette paroi inférieure, ainsi que par des baguettes disposées sur le dessus de la feuille trouée distributrice d'air, caractérisé en ce que

- la paroi inférieure étanche est faite d'une plaque rigide (1) en matière plastique ou en amiante-ciment,

- le long de ses bords, la feuille trouée distributrice d'air (2) est reliée de façon étanche à la plaque rigide au moyen de rebords (3, 4),

- les baguettes (7), également faites en matière plastique, sont directement reliées à la plaque rigide.

2. Diffuseur d'air selon la revendication 1, caractérisé en ce que des vis (5), de préférence autotaraudeuses, servent à assembler les rebords (3, 4), la feuille distributrice d'air (2) et/ou les baguettes (7) avec la plaque rigide (1).

3. Diffuseur d'air selon la revendication 1, caractérisé en ce que l'assemblage des rebords (3, 4), de la feuille distributrice d'air (2) et/ou des baguettes (7) avec la plaque rigide (1) est assuré par des rivets.

4. Diffuseur d'air selon la revendication 1, caractérisé en ce que des agrafes (6) saisissant les rebords (3, 4) sont prévues pour relier la feuille distributrice d'air (2) à la plaque rigide (1).

5. Diffuseur d'air selon l'une des revendications 1 à 4, caractérisé en ce que des lests (10) sont disposés transversalement dans la plaque rigide (1), à distance les uns des autres.

6. Diffuseur d'air selon la revendication 5, caractérisé en ce que des tiges de fer servent de lests (10).

7. Diffuseur d'air selon l'une ou plusieurs des revendications 1 à 6, caractérisé en ce que la feuille distributrice d'air (2) est munie d'un raccord d'arrivée d'air ( 9) disposé dans une rondelle d'étanchéité (8).

0 171 452

FIG.1

FIG.2

1